# EUROPEAN PATENT SPECIFICATION

(11) **EP 3 433 170 B1**
(45) Date of publication and mention of the grant of the patent: **22.01.2020**
(21) Application number: 17718745.7
(22) Date of filing: 22.03.2017
(51) Int. Cl.: B64C 29/00, B64C 35/00

(54) **AIRPLANE**
FLUGZEUG
AÉRONEF

(30) Priority: 23.03.2016 IT UA20161920
(43) Date of publication of application: 30.01.2019
(73) Proprietor: BASCHIERI, Mauro, 41122 Modena (IT)
(72) Inventor: BASCHIERI, Mauro, 41122 Modena (IT)
(74) Representative: Brunacci, Marco
(86) International application number: PCT/IB2017/051662
(87) International publication number: WO 2017/163200

(56) References cited:
- US-A- 1 436 552
- US-A- 1 664 295
- US-A1- 2003 094 537
- US-A1- 2008 001 025

## Description

### Technical Field

The present invention relates to an airplane for civil transports.

### Background Art

Scientific and technological progress in the aerodynamics sector has determined a strong increase in civil air transport from the twentieth century to the present day.

To date, air transport has been the best way of transport to cover medium and long distances, above all due to the speed these distances have been covered.

The aircraft mainly used for the civil air transport of people and merchandise are airplanes, commonly called "planes" of various types and sizes.

Known airplanes are means of transport with rigid and fixed wings installed on a central body adapted to transport persons, commonly called "fuselage", and able to take off and fly in the air.

For this purpose, airplanes have thrusting systems able to push these aircraft at speeds suitable for increasing the lift force needed to enable them to take off.

Such thrusting systems apply a thrust substantially parallel to the wing plane, with the plane which has to cover on the ground, during the acceleration phase, a linear tract until the lift is able to raise the aircraft and keep it in the air.

Known airplanes have drawbacks tied to the distances required for take-off to occur.

To increase the lift force in fact, take-off/landing runways are needed about one kilometer long.

Such circumstance does in fact make civil airports difficult to build because large land areas are required on which to build take-off and landing runways long enough for the aircraft to achieve the speeds required for take-off.

For this reason, air transport remains restricted to large urban centers or to areas able to accommodate adequate airport infrastructures.

Another drawback of known scheduled flight planes is tied to their difficulty, not to say impossibility, of taking off from water expanses, e.g., after an emergency splashdown, or of taking off from rugged terrain.

All scheduled planes in fact have their own intrinsic buoyancy, which cannot however be exploited in terms of take-off and landing.

Other airplanes for civil transports are known from US 1 664 295, US 2008/001025, US 2003/094537 and US 1 436 552.

### Description of the Invention

The main object of the present invention is to provide an airplane for civil transports which permits taking off/landing from/on "unconventional" surfaces such as, e.g., water expanses or rugged terrain.

One object of the present invention is to provide an airplane for civil transports which permits a diffusion of air transport in geographically penalized areas as well.

Another object of the present invention is to provide an airplane for civil transports which allows to overcome the mentioned drawbacks of the prior art within the ambit of a simple, rational, easy and effective to use as well as affordable solution.

The above mentioned objects are achieved by the present airplane for civil transports having the characteristics of claim 1.

### Brief Description of the Drawings

Other characteristics and advantages of the present invention will become more evident from the description of a preferred, but not exclusive, embodiment of an airplane for civil transports, illustrated by way of an indicative, but non-limiting example in the accompanying drawings, wherein:
Figure 1 is a plan view of an airplane according to the invention;
Figure 2 is a side view of an airplane according to the invention;
Figure 3 is a front sectional view of an airplane according to the invention.

### Embodiments of the Invention

With particular reference to such figures, globally indicated with reference numeral 1 is an airplane for civil transports.

The airplane 1, for sake of simplicity called plane, comprises a fuselage element 2 adapted to transport persons and/or merchandise.

The fuselage element 2 shown in the illustrations has an elongated tubular shape with the front and rear extremities rounded to favor the aerodynamics thereof.

Fuselage elements 2 of different shape cannot be ruled out, e.g., specially developed forms to facilitate the transport of merchandise or the transport of persons.

The fuselage element 2 is provided with two sets of wheels 3, preferably arranged in tandem, but the use of a different number of wheels cannot be ruled out, adapted to enable the airplane 1 to taxi when it is on the ground.

Advantageously, the fuselage element 2 is windowless.

The fuselage element 2, in fact, has an outer surface which extends with continuity, without openings that could create a visual link between the inside of the fuselage element and the outside.

This solution permits avoiding the punctual concentration of the stresses which would otherwise occur in the presence of windows, preserving the fuselage from structural weakening and ensuring greater strength, above all to fatigue.

To obviate the lack of windows, the airplane 1 comprises cameras positioned outside the fuselage element 2 and connected to screens arranged internally, suitably positioned in front of each passenger.

The airplane 1 also comprises gliding means 4, 5 associated with the fuselage element 2 in such a manner as to assemble an aircraft body 2, 4, 5 fit for flight.

In particular, the gliding means 4, 5 comprise a couple of wing groups 4, placed on the opposite side (windows) the one with respect to the other with respect to the fuselage element 2, and empennage elements 5, provided with vertical stabilizer and rudder adapted to stabilize the airplane 1 during flight.

More particularly, the wing groups 4 comprise a first wing 4a placed over a second wing 4b.

More in detail, the first wing 4a is placed above the second wing 4b, giving the wing group 4 a bi-plane configuration.

Both the wings 4a, 4b are fixed to the fuselage element 2 at different heights and spaced apart the one from the other.

Usefully, the wings 4a, 4b converge on one another towards the outermost extremity, i.e., as you gradually proceed away from the fuselage element 2, the distances between the two wing planes shorten until they are eliminated at the extremity, where the wings 4a, 4b join one another.

Solutions cannot be ruled out which provide for a first wing 4a and a second wing 4b also spaced apart from one another at the outermost extremity.

In any case, the first wing 4a and the second wing 4b are associated with said fuselage element to assemble a structural reticular element.

Advantageously, the second wing 4b is shaped with a positive dihedral angle, i.e. is inclined to the horizontal plane with the outermost extremity placed at a higher level than the height of the extremity fixed to the fuselage element 2.

In the embodiment shown in the illustrations, the wing 4a is shaped with zero dihedral angle, i.e., it is horizontal, but different shapes cannot be ruled out, e.g., with positive dihedral angle.

Such wing configuration allows for a better distribution of the stresses due mainly both to the aerodynamic and non-aerodynamic thrusts, above all vertical, thus avoiding a concentration of stresses at points particularly susceptible to breakages (wing-fuselage connections, wing-wing connections and the like), and to the weight of the thrusting means 6 positioned at the extremities of the wings.

The airplane 1 in fact comprises thrusting means 6 associated with the aircraft body 2, 4, 5 and adapted to provide a flight thrust to the latter.

In the present discussion, by the term "flight thrust" is meant the thrust force needed to enable the plane to take off.

The thrusting means 6 comprise one or more jets which exploit the energy deriving from fuel combustion, e.g., kerosene or liquid hydrogen, to move the airplane 1.

Usefully, the thrusting means 6 are the type of liquid hydrogen thrusting systems.

The combustion of liquid hydrogen in fact involves the production of water vapor with considerable benefits in terms of safeguarding the environment and reducing polluting emissions.

According to the invention, the thrusting means 6 are adjustable with respect to the wing groups 4.

In particular, the thrusting means 6 are rotatable with respect to a pre-set direction 7.

Advantageously, the thrusting means 6 are rotatable in a dependent manner with respect to any direction chosen.

This way, the direction of thrust of the latter can be changed allowing the airplane 1 to take off/land vertically.

An alternative solution cannot however be ruled out wherein the thrusting means 6 are fixed and are provided with rotatable deviating caps adapted to interact with the thrust jets generated by the thrusting means themselves thus orientating their direction of thrust.

Advantageously, the airplane 1 is equipped with thrusting means 6 arranged symmetrically at the extremities of the wing groups 4, so as to ensure a balancing of the thrusts acting on the aircraft body 2, 4, 5.

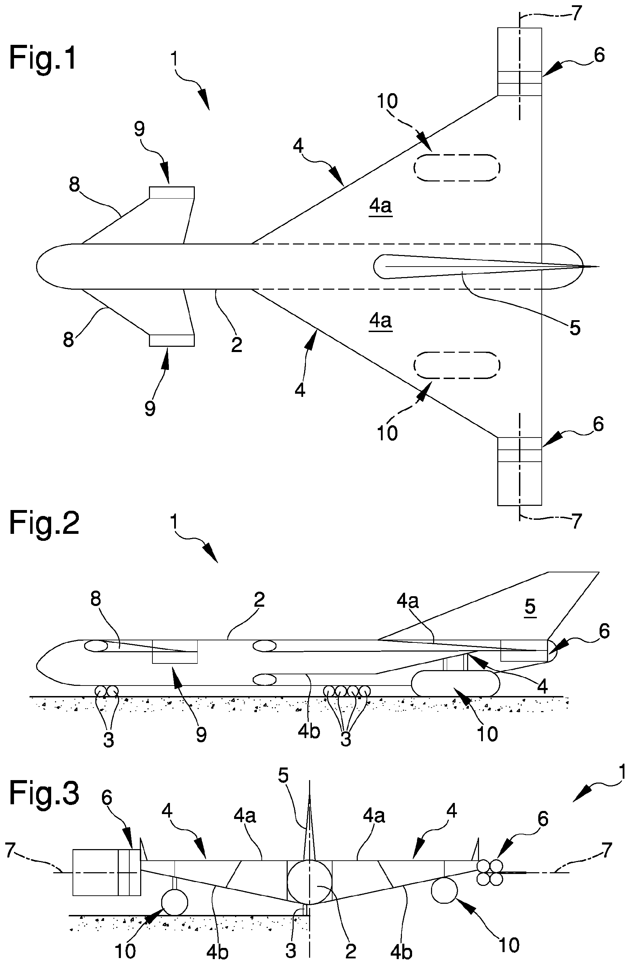

With reference to the front view of Figure 3, both the case is shown wherein the thrusting means 6 are rotated so as to apply a vertical thrust on the same wing group (left wing group 4) and the case wherein the thrusting means 6 are arranged horizontally during flight (right wing group 4).

In the embodiment shown in the illustrations, the airplane is provided with a pair of auxiliary wing elements 8 adapted to support respective auxiliary thrusting means 9.

The auxiliary wing elements 8 are smaller in size compared to the wing groups 4 and the auxiliary thrusting means 9, compared to the thrusting means 6, are brought close to the fuselage element 2.

This configuration permits having three thrusts localized on three points defining a triangle around the centre of gravity of the airplane 1 so as to obtain the balancing of the thrust actions required for take-off.

The auxiliary thrusting means 9 are similar to the thrusting means 6.

In particular, the auxiliary thrusting means 9 are adjustable with respect to the auxiliary wing elements 8 and are rotatable with respect to a pre-set direction 7.

Still according to the invention, the airplane comprises at least a stabilizing element 10 associated with the aircraft body 2, 4, 5 and adapted to stabilize the latter in buoyancy.

In particular, the stabilizing element 10 allows exploiting the intrinsic buoyancy of the airplane 1 ensuring the stability thereof, and therefore control, when it is immersed, counteracting any rotations and rocking tied to the weight of the wings.

In particular, the airplane 1 comprises a couple of stabilizing elements 10 associated with respective wing groups 4.

More particularly, the stabilizing elements 10 are fixed to the second wing 4b, in such a way as to come into contact with the water before the wing group 4 in case of splashdown.

Usefully, the stabilizing elements 10 are movable with respect to the wing group 4 between a closed configuration, in which the stabilizing element 10 is adjacent to the wing group 4, and an open configuration in which the stabilizing element 10 is wide apart from the wing group 4.

Such solution permits retracting, partially or totally, the stabilizing elements 10 during flight, maximizing the aerodynamics of the aircraft body 2, 4, 5.

The stabilizing elements 10 can be of the type of buoyant horizontal cylinders associated with actuator elements inserted in the wing group 4.

The actuator elements are adapted to push out and retract the stabilizing element 10 with respect to the wing.

The horizontal cylinders 10 are preferably hollow, but different solutions cannot be ruled out as long as they are able to ensure enough buoyancy thrust useful for the control and stabilization of the intrinsic buoyancy.

The stabilizing elements 10 shown in the illustrations touch the ground also acting as ground stabilizer support when the airplane 1 is stopped in the airport.

Advantageously, the airplane 1 comprises honeycomb structuring material, the latter provided with high resistance to stress and lightness. Preferably, such material is of the meta-aramid based type, e.g., NOMEX®, used as inner padding for the various parts of the airplane 1.

The honeycomb material is enclosed in coating casings adapted to contain the material itself.

In particular, the wing groups 4, but other parts cannot be ruled out like the fuselage element 2 and the empennage elements 5, comprise external casings enclosing the honeycomb structuring material and made of fiber-reinforced composite material, this too characterized by high mechanical strength.

The use of this type of materials gives the airplane lightness and strength, combining at the same time the need to consume less fuel with the need to ensure the safety and functionality of the airplane 1.

Alternative solutions cannot be ruled out in which, e.g., the materials used are different, provided that they are characterized by high stiffness, high lightness and high mechanical resistance.

Preferably, the airplane 1 comprises a dynamic control system, for sake of simplicity not shown in the figures, having gyroscopic sensors associated with the aircraft body 2, 4, 5 for the control and stabilization of the airplane 1 during take-off, landing and flight.

The gyroscopic sensors are of the type of gyroscopic sensors with at least three axes.

The gyroscopic sensors communicate with an electronic command unit, providing the control system with information on the trim and positioning of the airplane.

Usefully, the thrusting means 6 and the auxiliary thrusting means 9 are operatively connected to the electronic unit, thereby if necessary to be operated and directed for the control of the airplane 1 during take-off, landing and flight.

Advantageously, the control system comprises a group of nozzles associated with the gyroscopic sensors and arranged on the aircraft body 2, 4, 5 to balance the position of the latter.

In particular, the nozzles are positioned at the extremities of the wings, both at the nose and at the tail.

The nozzles, according to the information coming from the gyroscopic sensors, generate thrusts, preferably sub-vertical, by means of jets of compressed air, so as to correct the positioning of the airplane in case of instability.

Usefully, the dynamic control system comprises at least one heavy gyroscopic element associated with the aircraft body 2, 4, 5 for the control and stabilization of the airplane 1 during flight.

In particular, the airplane 1 comprises a plurality of heavy gyroscopic elements adapted to balance the position of the airplane itself during cruising.

The heavy gyroscopic elements are of the inertial gyroscope type, but different types of gyroscope cannot be ruled out.

The operation of the present invention is as follows.

The thrusting means 6 and the auxiliary thrusting means 9, suitable orientated, once operated, thrust the airplane 1 vertically, causing it to take off/land.

The particular configuration of the wing groups 4, with two wings 4a, 4b, defining a reticular structure, well distributes the vertical thrust on the wings themselves thus minimizing the concentration of stresses at points susceptible to damage and breakage.

When the airplane 1 is in flight, the thrusting means 6 and the auxiliary thrusting means 9, are rotated by 90° with respect to the take-off phase, so as to be aligned with the wing plane to provide the horizontal thrust needed to thrust the aircraft along a horizontal direction.

During flight, the stabilizing elements 10 are retracted in closing configuration, so as to provide the least possible air resistance.

In flight, furthermore, the gyroscopic sensors read the parameters needed to define the positioning of the aircraft.

In case of instability, the information deriving from the gyroscopic sensors is translated into commands for any operation of the nozzles and/or of the thrusting means 6 and of the auxiliary thrusting means 9.

The nozzles, by sending jets of compressed air, provide extra thrusts to the aircraft body 2, 4, 5 adapted to balance the positioning of the airplane 1.

In the same way, the thrusting means 6 and the auxiliary thrusting means 9 provide the thrusts needed to balance the aircraft body 2,4,5, in particular during the take-off and landing phases.

During the landing phase, in fact, the thrusting means 6 and the auxiliary thrusting means 9 are again rotated by 90° around the pre-set direction 7, but in a way to counteract the vertical drop of the airplane 1 to make ground contact easier.

If the airplane has to land on water, the stabilizing elements 10 are brought to the opening configuration, i.e., extracted from the wing groups 4, so as to come into contact with the water before the latter.

This way, the airplane 1 easily manages to float in a stable way, allowing easy splashdown operations.

Subsequently, by suitably repositioning the thrusting means 6 and the auxiliary thrusting means 9, the airplane 1 can take off from the water expanse, with operations precisely the same as those described above.

It has in practice been ascertained that the described invention achieves the intended objects and in particular the fact is underlined that the provided airplane for civil transports permits taking off and landing from/onto "unconventional" surfaces such as, e.g., water expanses or rugged terrain.

In fact, the thrusting means, adjustable with respect to the wing groups and the presence of the stabilizing elements, enable the airplane to both take off without covering long distances on the ground, and to take off from water expanses such as lakes, rivers or other water airports.

Such solution makes possible the more widespread use of air transport even in geographically penalized areas.

The airplane provided, in fact, can take off and land both in existing airports and water airports, and in areas devoid of airport infrastructures, enabling places to be reached by air transport which would otherwise be cut off from such means of transport.

The airplane provided therefore makes unnecessary the long landing/take-off runways used to date in airports with consequent benefits in terms of infrastructure building and maintenance costs and land use and consumption.

Vertical takeoff, furthermore, has the advantage of making unnecessary the deicing of the aircraft body before take-off.

The weight of the ice, in fact, can be easily overcome by the vertical thrusts of the jets, unlike the case of tradition take-offs where, because of the additional weight, which might not be correctly determined and therefore not removed, the length necessary to achieve enough lift force for take-off would increase considerably, including with catastrophic effects.

All in all, the airplane provided is a vertical take-off and landing airplane, besides being amphibious with possibility of splashdown, this too vertical.

## Claims

1. Airplane (1) for civil transports comprising:
- a fuselage element (2) adapted to transport persons and/or merchandise;
- gliding means (4, 5) associated with said fuselage element (2) to assemble an aircraft body (2, 4, 5) fit for flight and comprising a couple of wing groups (4) placed on opposite positions with respect to said fuselage element (2);
- thrusting means (6) associated with said aircraft body (2, 4, 5) and adapted to give a flight thrust to said aircraft body (2, 4, 5);
wherein said thrusting means (6) are adjustable with respect to said wing groups (4), and wherein the airplane (1) comprises at least a stabilizing element (10) associated with said aircraft body (2, 4, 5) and adapted to stabilize said aircraft body (2, 4, 5) in buoyancy;
**characterized in that** said stabilizing element (10) is movable with respect to said wing group (4) between a closed configuration, in which said stabilizing element (10) is adjacent to said wing group (4), and an open configuration in which said stabilizing element (10) is wide apart from said wing group (4), wherein the fuselage element (2) is provided with two sets of wheels (3) adapted to enable the airplane (1) to taxi when it is on the ground.

2. Airplane (1) according to claim 1, **characterized by** the fact that the said wing groups (4) comprise a first wing (4a) placed over a second wing (4b).

3. Airplane (1) according to claim 2, **characterized by** the fact that said first wing (4a) and said second wing (4b) are associated with said fuselage element (2) to assemble a structural reticular element.

4. Airplane (1) according to claim 2 or 3, **characterized by** the fact that said second wing (4b) is shaped with a positive dihedral angle.

5. Airplane (1) according to one or more of the preceding claims, **characterized by** the fact that it comprises at least a couple of said stabilizing elements (10) associated with corresponding wing groups (4).

6. Airplane (1) according to one or more of the preceding claims, **characterized by** the fact that it comprises honeycomb structuring material enclosed in coating casings.

7. Airplane (1) according to one or more of the preceding claims, **characterized by** the fact that said fuselage element (2) is windowless.

8. Airplane (1) according to one or more of the preceding claims, **characterized by** the fact that it comprises a dynamic control system having gyroscopic sensors associated with said aircraft body (2, 4, 5) for the control and stabilization of said airplane (1) during take-off, landing and flight.

9. Airplane according to claim 8, **characterized by** the fact that the said dynamic control system comprises heavy gyroscopic elements associated with said aircraft body (2, 4, 5) for the control and stabilization of said airplane (1) during flight.

10. Airplane (1) according to claim 8, **characterized by** the fact that said control system comprises a group of nozzles associated at least with said gyroscopic sensors and arranged on said aircraft body (2, 4, 5) to balance the position of the latter.

## Patentansprüche

1. Flugzeug (1) für zivile Transporte, umfassend:
- ein Rumpfelement (2), das zum Transport von Personen und/oder Waren geeignet ist;
- Gleitmittel (4, 5), die dem Rumpfelement (2) zugeordnet sind, um einen Flugzeugkörper (2, 4, 5) zusammenzubauen, der flugfähig ist und ein paar Flügelgruppen (4) umfasst, die an gegenüberliegenden Positionen in Bezug auf das Rumpfelement (2) angeordnet sind;
- Schubmittel (6), die dem Flugzeugkörper (2, 4, 5) zugeordnet und angepasst sind, um dem Flugzeugkörper (2, 4, 5) einen Flugschub zu verleihen;
- wobei die Schubmittel (6) in Bezug auf die Flügelgruppen (4) verstellbar sind, und wobei das Flugzeug (1) mindestens ein Stabilisierungselement (10) umfasst, das dem Flugzeugkörper (2, 4, 5) zugeordnet und zum Stabilisieren des Flugzeugkörpers (2, 4, 5) im Auftrieb ausgelegt ist;
**dadurch gekennzeichnet, dass** das Stabilisierungselement (10) in Bezug auf die Flügelgruppe (4) zwischen einer geschlossenen Konfiguration, in der das Stabilisierungselement (10) an die Flügelgruppe (4) angrenzt, und einer offenen Konfiguration, in der das Stabilisierungselement (10) weit von der Flügelgruppe (4) entfernt ist, beweglich ist, wobei das Rumpfelement (2) mit zwei Radsätzen (3) versehen ist, die so angepasst sind, dass das Flugzeug (1) rollen kann, wenn es sich am Boden befindet.

2. Flugzeug (1) nach Anspruch 1, **dadurch gekennzeichnet, dass** die Flügelgruppen (4) einen ersten Flügel (4a) umfassen, der über einem zweiten Flügel (4b) angeordnet ist.

3. Flugzeug (1) nach Anspruch 2, **dadurch gekennzeichnet, dass** der erste Flügel (4a) und der zweite Flügel (4b) dem Rumpfelement (2) zugeordnet sind, um ein strukturelles Netzelement herzustellen.

4. Flugzeug (1) nach Anspruch 2 oder 3, **dadurch gekennzeichnet, dass** der zweite Flügel (4b) mit einem positiven dihedralen Winkel geformt ist.

5. Flugzeug (1) nach einem oder mehreren der vorstehenden Ansprüche, **dadurch gekennzeichnet, dass** es mindestens ein paar der Stabilisierungselemente (10) umfasst, die den entsprechenden Flügelgruppen (4) zugeordnet sind.

6. Flugzeug (1) nach einem oder mehreren der vorstehenden Ansprüche, **dadurch gekennzeichnet, dass** es ein in Beschichtungsgehäusen eingeschlossenes Wabenstrukturmaterial umfasst.

7. Flugzeug (1) nach einem oder mehreren der vorstehenden Ansprüche, **dadurch gekennzeichnet, dass** das Rumpfelement (2) fensterlos ist.

8. Flugzeug (1) nach einem oder mehreren der vorstehenden Ansprüche, **dadurch gekennzeichnet, dass** es ein dynamisches Steuerungssystem mit gyroskopischen Sensoren umfasst, die dem Flugzeugkörper (2, 4, 5) zur Steuerung und Stabilisierung des Flugzeugs (1) während Start, Landung und Flug zugeordnet sind.

9. Flugzeug nach Anspruch 8, **dadurch gekennzeichnet, dass** das dynamische Steuerungssystem schwere gyroskopische Elemente umfasst, die dem Flugzeugkörper (2, 4, 5) zur Steuerung und Stabilisierung des Flugzeugs (1) während des Fluges zugeordnet sind.

10. Flugzeug (1) nach Anspruch 8, **dadurch gekennzeichnet, dass** das Steuerungssystem eine Gruppe von Düsen umfasst, die zumindest den gyroskopischen Sensoren zugeordnet und auf dem Flugzeugkörper (2, 4, 5) angeordnet sind, um die Position des letzteren auszugleichen.

## Revendications

1. Avion (1) pour des transports civils comprenant :
- un élément de fuselage (2) adapté pour transporter des personnes et/ou des marchandises ;
- des moyens de glissement (4, 5) associés audit élément de fuselage (2) pour assembler un corps d'aéronef (2, 4, 5) apte à voler et comprenant un couple de groupes d'ailes (4) placés sur des positions opposées par rapport audit élément de fuselage (2) ;
- des moyens de poussée (6) associés audit corps d'aéronef (2, 4, 5) et adaptés pour donner une poussée de vol audit corps d'aéronef (2, 4, 5) ;
dans lequel lesdits moyens de poussée (6) sont réglables par rapport auxdits groupes d'ailes (4), et dans lequel l'avion (1) comprend au moins un élément stabilisant (10) associé audit corps d'aéronef (2, 4, 5) et adapté pour stabiliser ledit corps d'aéronef (2, 4, 5) en flottabilité ;
**caractérisé en ce que** ledit élément stabilisant (10) est mobile par rapport audit groupe d'ailes (4) entre une configuration fermée, dans laquelle ledit élément stabilisant (10) est adjacent audit groupe d'ailes (4), et une configuration ouverte dans laquelle ledit élément stabilisant (10) est espacé dudit groupe d'ailes (4),
dans lequel l'élément de fuselage (2) est pourvu de deux ensembles de roues (3) adaptés pour permettre à l'avion (1) de rouler lorsqu'il est sur le sol.

2. Avion (1) selon la revendication 1, **caractérisé par le fait que** lesdits groupes d'ailes (4) comprennent une première aile (4a) placée sur une seconde aile (4b).

3. Avion (1) selon la revendication 2, **caractérisé par le fait que** ladite première aile (4a) et ladite seconde aile (4b) sont associées audit élément de fuselage (2) pour assembler un élément réticulaire structurel.

4. Avion (1) selon la revendication 2 ou 3, **caractérisé par le fait que** ladite seconde aile (4b) est formée avec un angle dièdre positif.

5. Avion (1) selon l'une ou plusieurs des revendications précédentes, **caractérisé par le fait qu'**il comprend au moins un couple desdits éléments stabilisants (10) associés à des groupes d'ailes (4) correspondants.

6. Avion (1) selon l'une ou plusieurs des revendications précédentes, **caractérisé par le fait qu'**il comprend un matériau de structuration en nid d'abeilles renfermé dans des carters de revêtement.

7. Avion (1) selon l'une ou plusieurs des revendications précédentes, **caractérisé par le fait que** ledit élément de fuselage (2) est sans fenêtre.

8. Avion (1) selon l'une ou plusieurs des revendications précédentes, **caractérisé par le fait qu'**il comprend un système de commande dynamique ayant des capteurs gyroscopiques associés audit corps d'aéronef (2, 4, 5) pour la commande et la stabilisation dudit avion (1) pendant le décollage, l'atterrissage et le vol.

9. Avion selon la revendication 8, **caractérisé par le fait que** ledit système de commande dynamique comprend des éléments gyroscopiques lourds associés audit corps d'aéronef (2, 4, 5) pour la commande et la stabilisation dudit avion (1) pendant le vol.

10. Avion (1) selon la revendication 8, **caractérisé par le fait que** ledit système de commande comprend un groupe de tuyères associées au moins auxdits capteurs gyroscopiques et agencées sur ledit corps d'aéronef (2, 4, 5) pour équilibrer la position de ce dernier.
